# EUROPÄISCHE PATENTSCHRIFT

(11) **EP 3 263 389 B1**
(45) Veröffentlichungstag und Bekanntmachung des Hinweises auf die Patenterteilung: **23.01.2019**
(21) Anmeldenummer: 17169910.1
(22) Anmeldetag: 08.05.2017
(51) Int. Cl.: B60K 35/00, B60R 1/00

(54) **VERFAHREN ZUM ANZEIGEN EINER FAHRZEUGFUNKTION**
METHOD FOR DISPLAYING A FUNCTION OF A VEHICLE
PROCÉDÉ D'AFFICHAGE D'UNE FONCTION DE VÉHICULE

(30) Priorität: 01.07.2016 DE 102016212034
(43) Veröffentlichungstag der Anmeldung: 03.01.2018
(73) Patentinhaber: Robert Bosch GmbH, 70442 Stuttgart (DE)
(72) Erfinder: Cano, Raphael, 70180 Stuttgart (DE)

(56) Entgegenhaltungen:
- DE-A1-102007 008 835
- DE-A1-102008 034 606
- JP-A- H05 278 469
- US-A1- 2011 282 537
- US-A1- 2015 274 016

## Beschreibung

### Stand der Technik

Die vorliegende Erfindung betrifft ein Verfahren zum Anzeigen einer Funktion eines Fahrzeugs. Weiterhin betrifft die Erfindung ein Computerprogrammprodukt zum Ausführen eines solchen Verfahrens. Schließlich betrifft die Erfindung ein Steuergerät und eine Anordnung, mit denen ein solches Verfahren ausführbar ist.

Aus dem Stand der Technik sind SurroundView-Systeme bekannt, die in Fahrzeugen Verwendung finden. Solche Systeme zeigen dem Fahrer des Fahrzeugs eine Szenerie einer Umgebung des Fahrzeugs räumlich an. Somit ist dem Fahrer das Navigieren, insbesondere bei beengten Platzverhältnissen, vereinfacht. Ein solches System findet insbesondere als Einparkunterstützung Anwendung. Es ist außerdem bekannt, dass solche SurroundView-Systeme derart erweitert werden, dass eine räumliche Repräsentation des Fahrzeugs in die Szenerie eingefügt wird. Somit besteht für den Fahrer die Möglichkeit, mit einer virtuellen Kamera die Umgebung rund um sein Fahrzeug aus unterschiedlichen Blickwinkeln zu betrachten.

Weiterhin ist aus dem Stand der Technik bekannt, dass Fahrern eines Fahrzeugs eine interaktive Informationsausgabe bereitgestellt wird. So offenbart insbesondere die DE 10 2007 008 835 A1 eine Möglichkeit, einem Fahrer eines Fahrzeugs interaktiv verschiedene Funktionen des Fahrzeugs anzuzeigen. Dabei ist insbesondere offenbart, dass dem Fahrer des Fahrzeugs eine virtuelle, animierte Person verschiedene Funktionen des Fahrzeugs erklärt, wobei die animierte Person mit Animationen des Fahrzeugs zusammenwirken kann.

Ein Verfahren mit den Merkmalen des Oberbegriffs des Anspruchs 1 zeigt die US 2015/0274016 A1.

### Offenbarung der Erfindung

Das erfindungsgemäße Verfahren zum Anzeigen einer Funktion eines Fahrzeugs erlaubt dem Fahrer eine realitätsgetreue Präsentation verschiedener Funktionen seines Fahrzeugs anzuzeigen. Dabei wird auf eine aus dem Stand der Technik bekannte feste Präsentation oder Animation verzichtet, sondern es wird vielmehr eine Präsentation innerhalb einer Anzeige einer aktuellen Umgebung des Fahrzeugs dargestellt. So erfolgt zunächst ein erstes Abrufen von Szeneriedaten, die ein Umfeld des Fahrzeugs räumlich wiedergeben. Das Abrufen der Szeneriedaten erfolgt aus einem Speicher. Der Speicher ist somit eingerichtet, Szeneriedaten zu speichern. Anschließend erfolgt ein zweites Abrufen von Modelldaten, wobei die Modelldaten ein Modell des Fahrzeugs räumlich wiedergeben. Das zweite Abrufen erfolgt ebenfalls aus dem Speicher. Der Speicher ist somit insbesondere eingerichtet, zusätzlich zu den Szeneriedaten die Modelldaten zu speichern. Schließlich erfolgt ein drittes Abrufen von Animationsdaten, wobei die Animationsdaten eine Animation des Modells des Fahrzeugs umfassen. Auch die Animationsdaten werden insbesondere aus dem Speicher abgerufen, so dass der Speicher zusätzlich zum Speichern der Animationsdaten ausgebildet ist. Der Speicher kann ein einzelner Speicher sein oder eine Vielzahl von Teileinheitsspeichern umfassen. Die Teileinheitsspeicher können räumlich getrennt voneinander angeordnet sein.

Weiterhin erfolgt ein Zusammenführen der Szeneriedaten und der Modelldaten. Somit sind Daten vorhanden, die eine räumliche Repräsentation des Fahrzeugs in einer räumlichen Repräsentation der Umgebung des Fahrzeugs umfassen. Auf diese Weise ist ein SurroundView-System geschaffen, bei dem der Fahrer des Fahrzeugs die Umgebung des Fahrzeugs aus nahezu beliebigen virtuellen Perspektiven erblicken kann. Um dem Fahrer die Szeneriedaten und die Modelldaten, die in dem Schritt des Zusammenführens zusammengeführt wurden, anzuzeigen, erfolgt ein Schritt des Anzeigens der zusammengeführten Szeneriedaten und Modelldaten auf einer Anzeigevorrichtung. Dabei erfolgt die Anzeige aus einer vordefinierten Perspektive einer virtuellen Kamera. Vorteilhafterweise ist vorgesehen, dass die Perspektive der virtuellen Kamera durch den Benutzer veränderbar ist. Schließlich erfolgt ein Abspielen der Animation auf Basis der Animationsdaten auf der Anzeigevorrichtung. Somit wird dem Fahrer die Animation seines Fahrzeugs in der aktuellen Umgebung des Fahrzeugs dargestellt. Für den Fahrer ist somit die Wiedergabe der Animation sehr realitätsgetreu, da er die aktuelle Umgebung, die er aus dem Fahrzeug heraus erblicken kann, in der Anzeige wiederfindet.

Die Unteransprüche zeigen bevorzugte Weiterbildungen der Erfindung.

Bevorzugt ist vorgesehen, dass vor dem Schritt des dritten Abrufens die Schritte Empfangen und Auswählen durchgeführt werden. Dabei umfasst der Schritt des Empfangens ein Empfangen einer Benutzereingabe, die eine abzuspielende Animation umfasst. Das Empfangen erfolgt insbesondere über eine Eingabeeinheit. Die Eingabeeinheit kann bevorzugt eine Spracheingabeeinheit und/oder eine Tastatur und/oder einen berührungsempfindlichen Bildschirm umfassen. Anschließend erfolgt das Auswählen der abzurufenden Animationsdaten anhand der Benutzereingabe. Somit ist durch den Benutzer auswählbar, welche Animation gezeigt werden soll. Dies ermöglicht insbesondere das Bereitstellen einer Bedienungsanleitung in Form von einer Vielzahl von Animationen, so dass dem Fahrer des Fahrzeugs eine gewünschte Funktionalität im Sinne einer Bedienungsanleitung erklärt werden kann.

Besonders vorteilhaft wird vor dem Empfangen der Benutzereingabe der Schritt des Ausgebens eines Katalogs von Animationen ausgeführt. Dabei umfasst der Katalog solche Animationen, zu denen Animationsdaten in dem Speicher gespeichert sind. Das Ausgeben erfolgt wiederum auf der Anzeigevorrichtung. Dabei ist besonders vorteilhaft vorgesehen, dass das Ausgeben des Katalogs insbesondere durch Anzeigen einer Überlagerung zu den zusammengeführten Szeneriedaten und Modelldaten erfolgt. Somit wird dem Fahrer des Fahrzeugs eine Möglichkeit bereitgestellt, aus einer Vielzahl von Animationen auszuwählen. Dabei ist dem Fahrer insbesondere eine Übersicht über alle verfügbaren Animationen gezeigt. Durch das vorteilhafte Überlagern der Anzeige mit dem Anzeigen der zusammengeführten Szeneriedaten und Modelldaten bleibt dem Fahrer der räumliche Eindruck der Umgebung und des Fahrzeugs bestehen.

Vorteilhafterweise werden die Animation und/oder die zusammengeführten Szeneriedaten und Modelldaten mit einer Informationsanzeige überlagert. Auf diese Weise sind insbesondere einzelne Bereiche des Fahrzeugs hervorhebbar. Somit lassen sich vorteilhafterweise Warnungen, die bestimmte Bereiche des Fahrzeugs betreffen, darstellen. Das Augenmerk des Fahrers kann daher gezielt auf bestimmte Bereiche des Fahrzeugs gerichtet werden.

Vorteilhafterweise findet vor dem Abspielen einer Animation ein Schwenk der virtuellen Kamera in eine durch die Animation vordefinierte Startperspektive statt. Dies hat zur Folge, dass der Realitätsgrad der Anzeige für den Fahrer erhöht ist. So wird insbesondere eine Kontinuität der Anzeige gewährleistet, da das Abspielen einer Animation erst dann sichtbar ist, wenn die virtuelle Kamera vorher auf denjenigen Bereich des Fahrzeugs geschwenkt hat, für den eine Animation abgespielt werden soll. Wählt der Fahrer nach dem Abspielen der Animation eine andere Animation aus, so muss vor dem Abspielen der anderen Animation zunächst ein Schwenk der virtuellen Kamera erfolgen, um die durch die andere Animation vordefinierte Startperspektive zu erreichen. Auf diese Weise werden Sprünge in der Perspektive, das bedeutet eine abrupte Änderung der Perspektive, vermieden. Für den Fahrer entsteht somit ein realitätsgetreuer Eindruck.

Vorteilhafterweise umfasst das Verfahren zusätzlich die folgenden Schritte: Zunächst erfolgt ein Erfassen des Umfelds des Fahrzeugs mit einer Vielzahl von Kameras. Insbesondere ist eine Kamera derart ausgebildet, dass diese einen vordefinierten Bereich des Umfelds des Fahrzeugs abtastet, wobei die Vielzahl von Kameras derart angeordnet ist, dass jeder Bereich des Umfelds des Fahrzeugs durch zumindest eine Kamera erfassbar ist. Anschließend erfolgt ein Zusammenführen der Bilder der Vielzahl von Kameras zu den Szeneriedaten. Dies umfasst insbesondere ein Verbinden der einzelnen Bilder der Kameras, so dass eine durchgängige Repräsentation der Umgebung vorhanden ist. Insbesondere erfolgt zusätzlich ein Anpassen der Bildparameter der einzelnen Bilder, so dass insbesondere an Übergangsstellen, an denen Bilder von unterschiedlichen Kameras aufeinandertreffen, keine sichtbaren Nahtstellen vorhanden sind. Außerdem erfolgt bevorzugt ein Anpassen der Bilder hinsichtlich Helligkeit und/oder Schärfe und/oder Farbintensität. Schließlich ist vorgesehen, dass die Szeneriedaten in dem Speicher gespeichert werden. Somit sind die Szeneriedaten durch den Schritt des ersten Abrufens aus dem Speicher abrufbar.

Die Animation gibt vorteilhafterweise eine Funktion des Fahrzeugs wieder. Somit lässt sich ein Handbuch des Fahrzeugs dadurch realisieren, dass für alle Fahrzeugfunktionen erklärende Animationen bereitgestellt werden, so dass der Fahrer des Fahrzeugs, wenn er Informationen über bestimmte Funktionen des Fahrzeugs benötigt, eine entsprechende Animation abspielen lassen kann. Da das Abspielen der Animation in derselben räumlichen Repräsentation der Umgebung stattfindet, in der sich der Fahrer mit seinem Fahrzeug befindet, wirkt die Anleitung für den Fahrer sehr realitätsgetreu und intuitiv. Alternativ oder zusätzlich umfasst die Animation eine Warnung und/oder einen Pflegehinweis und/oder einen Wartungshinweis. Insbesondere wird dies dadurch erreicht, dass die zuvor beschriebene Überlagerung mit der Animation angezeigt wird, um zu wartende und/oder zu pflegende und/oder defekte Teile des Fahrzeugs zu markieren.

Weiterhin betrifft die Erfindung ein Computerprogrammprodukt. Das Computerprogrammprodukt umfasst einen maschinenlesbaren Programmcode zum Ausführen der Schritte des zuvor beschriebenen Verfahrens, wenn das Computerprogrammprodukt auf einer Rechenvorrichtung läuft. Unter einer Rechenvorrichtung ist im Rahmen der Erfindung insbesondere ein Steuergerät, besonders bevorzugt ein Steuergerät eines Fahrzeugs, zu verstehen.

Die Erfindung betrifft außerdem ein Steuergerät für ein Fahrzeug, wobei das Steuergerät eingerichtet ist, den Programmcode des zuvor beschriebenen Computerprogrammprodukts auszuführen. Dazu ist das Steuergerät insbesondere in ein Netzwerk des Fahrzeugs eingebunden, und ist insbesondere zum Datenaustausch mit einem Speicher, einer Anzeigevorrichtung und insbesondere auch einer Eingabevorrichtung verbunden.

Schließlich betrifft die Erfindung eine Anordnung, die ein Steuergerät wie zuvor beschrieben umfasst. Außerdem betrifft die Anordnung eine Vielzahl von Kameras, eine Anzeigevorrichtung und einen Speicher. Dabei ist vorgesehen, dass das Steuergerät mit der Eingabeeinheit, der Vielzahl von Kameras, dem Speicher und der Anzeigevorrichtung zur Signalübertragung verbunden ist. Auf diese Weise ist die Anordnung eingerichtet, das zuvor beschriebene Verfahren auszuführen. Insbesondere ist die Anordnung in einem Fahrzeug anbringbar.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Ablaufs eines Verfahrens gemäß einem Ausführungsbeispiel der Erfindung;
- Figur 2: eine schematische Ansicht einer Anordnung gemäß einem Ausführungsbeispiel der Erfindung; und
- Figur 3: eine schematische Abbildung eines Fahrzeugs, umfassend eine Anordnung gemäß dem Ausführungsbeispiel der Erfindung.

### Ausführungsformen der Erfindung

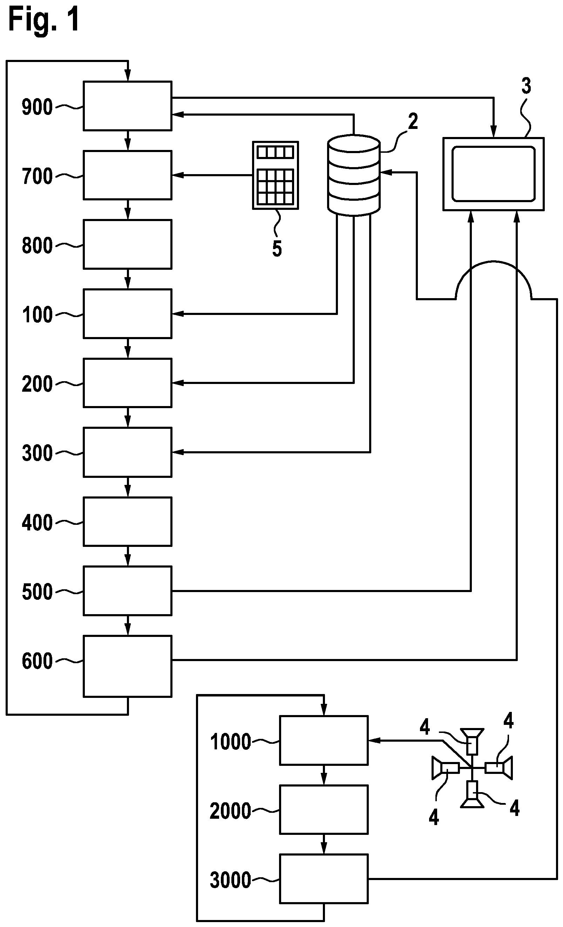

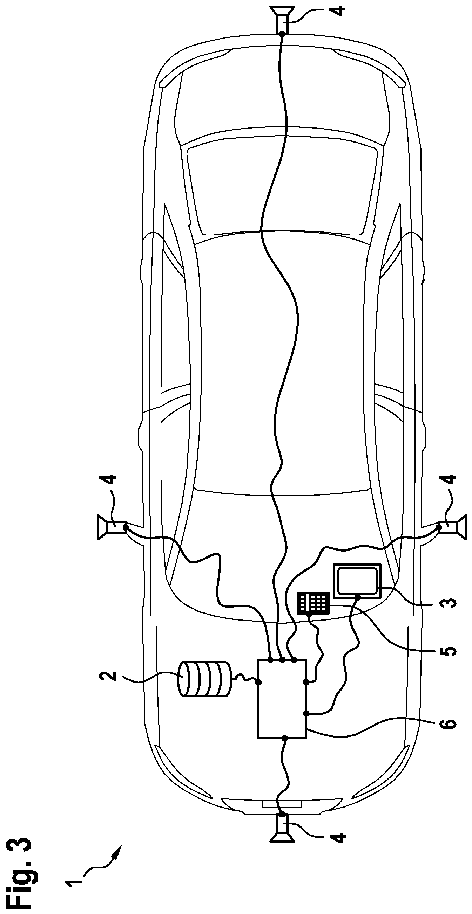

Figur 1 zeigt schematisch einen Ablaufplan eines Verfahrens gemäß einem Ausführungsbeispiel der Erfindung. Mit dem Verfahren gemäß dem Ausführungsbeispiel der Erfindung wird einem Fahrer eines Fahrzeugs 1 (vgl. Figur 3) eine Funktion des Fahrzeugs 1 angezeigt. Dazu erfolgt zunächst ein Ausgeben 900 eines Katalogs von Animationen, zu denen in einem Speicher 2 Animationsdaten gespeichert sind. Das Ausgeben 900 erfolgt auf einer Anzeigevorrichtung 3. Die Anzeigevorrichtung 3 ist insbesondere ein Bildschirm, der in einem Innenraum des Fahrzeugs 1 angeordnet ist. Somit ist dem Benutzer eine Auswahl an Animationen zur Verfügung gestellt, die auf der Anzeigevorrichtung 3 angezeigt werden können. Der Fahrer kann somit eine Auswahl treffen, welche Animation er sehen möchte.

Bevorzugt ist vorgesehen, dass die Vielzahl von Animationen jeweils eine Funktion des Fahrzeugs repräsentiert. So kann dem Fahrer des Fahrzeugs auf einfache und intuitive Weise erklärt werden, wie einzelne Funktionen seines Fahrzeugs 1 aufgebaut sind.

In einem nächsten Schritt erfolgt das Empfangen 700 einer Benutzereingabe. Die Benutzereingabe wird insbesondere über eine Eingabeeinheit 5 eingegeben. Die Eingabeeinheit 5 kann eine Tastatur, ein berührungssensitiver Bildschirm, eine Spracheingabe oder eine Gestenerkennung sein. Durch die Benutzereingabe ist die abzuspielende Animation festgelegt. Somit erfolgt in einem nächsten Schritt das Auswählen 800 der abzurufenden Animationsdaten aus dem Speicher 2.

Anschließend erfolgt ein erstes Abrufen 100, ein zweites Abrufen 200 und ein drittes Abrufen 300. Die Reihenfolge dieser Schritte ist vorteilhafterweise beliebig wählbar. Bei dem ersten Abrufen 100 werden Szeneriedaten aus dem Speicher 2 abgerufen, bei dem zweiten Abrufen werden Modelldaten aus dem Speicher 2 abgerufen, und bei dem dritten Abrufen werden Animationsdaten aus dem Speicher 2 abgerufen. Bei den Szeneriedaten handelt es sich um solche Daten, die ein Umfeld des Fahrzeugs 1 räumlich wiedergeben. Dies sind insbesondere Bilder von Kameras 4, die von dem Fahrzeug 1 aufgenommen wurden. Die Modelldaten geben ein Modell des Fahrzeugs 1 räumlich wieder. Die Animationsdaten umfassen eine Animation des Modells des Fahrzeugs 1. Dabei wurden die aus dem Speicher 2 abzurufenden Animationsdaten in dem vorherigen Schritt des Auswählens 800 festgelegt.

Nachdem das erste Abrufen 100, das zweite Abrufen 200 und das dritte Abrufen 300 durchgeführt wurden, erfolgt ein Zusammenführen 400 der Szeneriedaten und der Modelldaten. Anschließend erfolgt ein Anzeigen 500 der zusammengeführten Szeneriedaten und Modelldaten auf der Anzeigevorrichtung 3. Das Anzeigen der zusammengeführten Szeneriedaten und Modelldaten erfolgt aus einer vordefinierten Perspektive einer virtuellen Kamera. Somit ist dem Fahrer des Fahrzeugs auf der Anzeigevorrichtung 3 eine Umgebung des Fahrzeugs 1 zusammen mit einem Modell des Fahrzeugs 1 räumlich dargestellt. Der Fahrer des Fahrzeugs 1 sieht somit auf der Anzeigevorrichtung 3 dieselbe Umgebung, die er auch bei einem Blick aus dem Fahrzeug 1 heraus sehen kann, wobei der Fahrer vorteilhafterweise die Perspektive der virtuellen Kamera auf die zusammengeführten Szeneriedaten und Modelldaten beliebig verändern kann. Somit kann der Fahrer vorteilhafterweise einen Blickpunkt wählen, der ihm subjektiv die besten Informationen vermittelt.

Außerdem erfolgt ein Abspielen 600 der Animation, deren Animationsdaten aus dem Speicher 2 während des dritten Abrufens 300 abgerufen wurden. Bei der Animation handelt es sich insbesondere um eine Präsentation einer Funktion des Fahrzeugs 1. Somit wird dem Fahrer die Animation direkt an einem räumlichen Modell seines Fahrzeugs 1 gezeigt, wobei das räumliche Modell des Fahrzeugs 1 in einer Repräsentation der aktuellen räumlichen Umgebung angezeigt wird, in der sich das Fahrzeug 1 tatsächlich befindet. Vorteilhafterweise findet vor dem Abspielen 600 der Animation ein Schwenk der virtuellen Kamera statt. So ist vorteilhafterweise für jede Animation eine Startperspektive vordefiniert, in die die virtuelle Kamera geschwenkt wird. Auf diese Weise entsteht für den Fahrer des Fahrzeugs 1 ein kontinuierlicher Eindruck der Anzeige, da keine Unterbrechungen oder plötzlichen Perspektivwechsel vorhanden sind. Weiterhin ist vorgesehen, dass der Fahrer nach dem Schwenk der virtuellen Kamera die Position und die Perspektive der virtuellen Kamera weiterhin verändern kann, um die Anzeige nach seinen Wünschen anzupassen. Somit lässt sich insbesondere auch die Animation aus unterschiedlichen virtuellen Perspektiven betrachten.

Um den Informationsgehalt der Animation zu erhöhen, ist außerdem bevorzugt vorgesehen, dass diese mit zumindest einer Informationsanzeige überlagert wird. Die Informationsanzeige kann ein Hervorheben gewisser Bereiche des Modells des Fahrzeugs 1 sein, alternativ oder zusätzlich eine Anzeige eines, insbesondere halbtransparenten, Infofensters. Das Infofenster kann insbesondere die Form einer Sprechblase aufweisen, um dem Fahrer Informationen über bestimmte Bereiche oder Bauteile des Fahrzeugs 1 zu übermitteln. So kann die Animation bevorzugt erklären, ob gewisse Hebel oder Schalter des Fahrzeugs 1 gezogen oder gedrückt werden müssen, um ein gewünschtes Resultat zu erreichen.

So kann insbesondere eine Animation zum Erklären des Öffnens einer Motorhaube des Fahrzeugs 1 wie folgt ablaufen: Zunächst schwenkt die Perspektive der virtuellen Kamera in eine vordefinierte Startposition der Animation. In diesem Fall ist dies ein Schwenk auf die verschlossene Fahrertür des Modells des Fahrzeugs 1. Anschließend erfolgt eine Animation des Öffnens der Fahrertür. Schließlich zeigt eine Sprechblase den Hebel an, der zum Öffnen der Motorhaube zu betätigen ist. Dies kann mit einer Animation der Bewegung des Hebels gekoppelt sein. Schließlich erfolgt ein Schwenk auf die Motorhaube, wobei gezeigt wird, wie die Motorhaube zu entriegeln und falls nötig in der geöffneten Position abzustützen ist. Will der Fahrer anschließend Informationen über das Multimediasystem seines Fahrzeugs erhalten, so erfolgt ein erneuter Schwenk der virtuellen Kamera von der Perspektive, die die nun geöffnete Motorhaube zeigt, auf eine Mittelkonsole des Modells des Fahrzeugs 1. Wiederum kann mittels einer Sprechblase oder einer sonstigen Informationsanzeige eine Funktionalität des Fahrzeugs erklärt werden.

In einem alternativen Ausführungsbeispiel kann das Anzeigen einer Animation auch ohne vorheriges Zutun des Fahrers erfolgen. Auf diese Weise lassen sich insbesondere Warnungen und Hinweise darstellen. So kann eine Animation erfolgen, bei der ein Schwenk der virtuellen Kamera auf einen Reifen des Modells des Fahrzeugs 1 erfolgt. Anschließend wird über dem Reifen eine blinkende Überlagerung dargestellt, die dieselben Abmaße wie der Reifen aufweist. Zusammen mit einer Informationsanzeige kann der Fahrer so darauf hingewiesen werden, dass in dem Reifen der Luftdruck außerhalb eines vorgesehenen Wertebereichs liegt. Insbesondere kann durch eine Farbe der Überlagerung des Reifens angezeigt werden, wie kritisch die Abweichung von dem vorgesehenen Wertebereich ist.

Parallel zu den beschriebenen Schritten des Verfahrens ist außerdem vorgesehen, dass ein stetiges Erfassen 1000 des Umfelds des Fahrzeugs 1 erfolgt. Insbesondere erfolgt das Erfassen 1000 mit einer Vielzahl von Kameras 4. Anschließend erfolgt ein Zusammensetzen 2000 der Bilder der Vielzahl von Kameras 4 zu Szeneriedaten. Schließlich erfolgt ein Speichern 3000 der Szeneriedaten in dem Speicher 2. Auf diese Weise ist stets sichergestellt, dass bei dem ersten Abrufen 100 stets aktuelle Szeneriedaten abgerufen werden können. Somit erfolgt eine Anzeige auf der Anzeigevorrichtung 3 mit jeweils den aktuellen Szeneriedaten. Das Erfassen 1000, Zusammensetzen 2000 und Speichern 3000 folgt dabei bekannten Mechanismen, die bei SurroundView-Anzeigen von Fahrzeugen im Stand der Technik bereits verwendet werden. Insbesondere werden die Bilder der einzelnen Kameras, die mittels des Schritts des Erfassens 1000 erfasst wurden, in dem Schritt des Zusammensetzens 2000 derart kombiniert, dass sich ein homogenes Bild ergibt. Dies wird insbesondere dadurch erreicht, dass solche Bereiche in den einzelnen Bildern identifiziert werden, die Bereiche aus der Umgebung des Fahrzeugs 1 repräsentieren, die von zumindest zwei Kameras 4 erfasst werden. Somit lassen sich diese Bereiche auf je einem Bild von zumindest zwei unterschiedlichen Kameras 4 finden. Werden diese Bilder so zusammengesetzt, dass sich die doppelten Bereiche überlagern, so ergibt sich ein vergrößertes Bild der Umgebung. Insbesondere kann zusätzlich eine virtuelle Projektion der Bilder auf einen Schalenförmigen Körper erfolgen, sodass die Bilder aller Kameras zu einer räumlichen Repräsentation der Umgebung zusammensetzbar sind. Diese räumliche Repräsentation wird anschließend als die Szeneriedaten in dem Speicher 2 gespeichert.

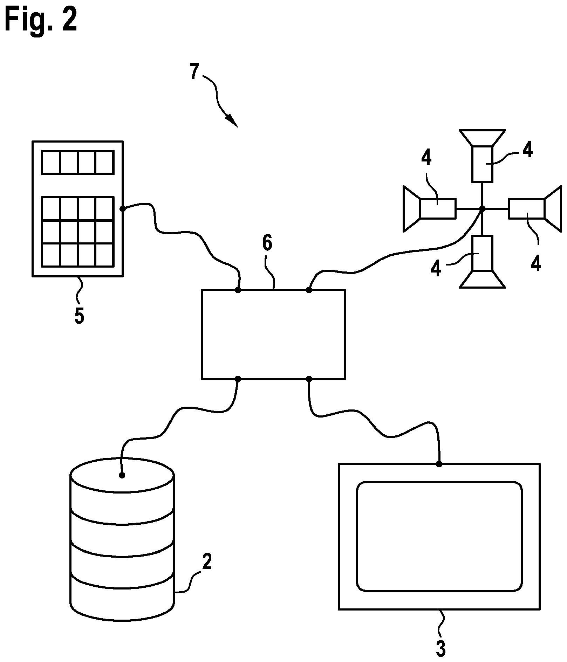

Figur 2 zeigt eine Anordnung 7 gemäß einem Ausführungsbeispiel der Erfindung. Mit der Anordnung 7 ist das Verfahren wie zuvor beschrieben ausführbar. Figur 3 zeigt schematisch ein Fahrzeug 1, in dem die Anordnung 7 angebracht ist.

Die Anordnung 7 umfasst ein Steuergerät 6, wobei das Steuergerät 6 mit einer Vielzahl von Kameras 4, einem Speicher 2, einer Anzeigevorrichtung 3 und einer Eingabeeinheit 5 zur Signalübertragung verbunden ist. Dabei ist vorgesehen, dass die Vielzahl von Kameras 4 ein Umfeld des Fahrzeugs 1, insbesondere vollständig, erfassen. In dem in Figur 3 gezeigten Ausführungsbeispiel ist eine Kamera 4 an einer Vorderseite, eine Kamera 4 an einer Rückseite sowie je eine Kamera 4 an einer Seitenfläche des Fahrzeugs 1 angebracht. Dabei ist vorgesehen, dass sich der Erfassungsbereich jeder Kamera 4 mit den Erfassungsbereichen von zumindest zwei weiteren Kameras 4 überschneidet, so dass eine Umgebung des Fahrzeugs 1 vollständig durch die Kameras 4 erfassbar ist. Die Anzeigevorrichtung 3 ist insbesondere ein Bildschirm, der in einem Innenraum des Fahrzeugs 1 angebracht ist, so dass dieser von dem Fahrer des Fahrzeugs 1 einsehbar ist. Ebenso ist die Eingabeeinheit 5 bevorzugt in einem Innenraum des Fahrzeugs 1 angebracht, so dass diese von dem Fahrer des Fahrzeugs 1 bedienbar ist. Bei der Eingabeeinheit 5 kann es sich vorteilhafterweise um eine berührungssensitive Oberfläche, wie insbesondere einen berührungssensitiven Bildschirm, um eine Spracheingabeeinheit oder um eine Tastatur handeln. Schließlich ist ein Speicher 2 eingerichtet, Szeneriedaten, Modelldaten und Animationsdaten zu speichern. Dazu kann der Speicher 2 eine einzige Einheit sein oder eine Vielzahl von Unterspeichereinheiten umfassen, wobei die Unterspeichereinheiten räumlich getrennt angeordnet sein können.

Mit dem erfindungsgemäßen Verfahren sowie mit der erfindungsgemäßen Anordnung, wie in den Ausführungsbeispielen beschrieben, ist somit eine zuverlässige und intuitive Darstellung von Informationen in Form von Animationen ermöglicht. Gleichzeitig stellt die beschriebene Anordnung 7 dem Fahrer ein SurroundView-System bereit, mit dem dieser die Umgebung seines Fahrzeugs 1 vollständig und aus unterschiedlichen Perspektiven virtuell betrachten kann. Insbesondere erlaubt das beschriebene Verfahren einen Verzicht auf Betriebsanleitungen, die gedruckt ausgeliefert werden. Gleichzeitig ist ein Komfort des Fahrers des Fahrzeugs 1 erhöht, da dieser keine mehrseitige Betriebsanleitung studieren muss, sondern vielmehr die gewünschte Funktion des Fahrzeugs 1 durch eine Animation einfach und intuitiv erklärt bekommt.

## Patentansprüche

1. Verfahren zum Anzeigen einer Funktion eines Fahrzeugs (1), umfassend die Schritte:
• Erstes Abrufen (100) von Szeneriedaten, die ein Umfeld des Fahrzeugs (1) räumlich wiedergeben, aus einem Speicher (2),
• zweites Abrufen (200) von Modelldaten, die ein Modell des Fahrzeugs (1) räumlich wiedergeben, aus dem Speicher (2),
• Zusammenführen (400) der Szeneriedaten und der Modelldaten, und
• Anzeigen (500) der zusammengeführten Szeneriedaten und Modelldaten aus einer vordefinierten Perspektive einer virtuellen Kamera auf einer Anzeigevorrichtung (3),
**dadurch gekennzeichnet, dass** folgende Schritte durchgeführt werden
• drittes Abrufen (300) von Animationsdaten, die eine Animation des Modells des Fahrzeugs (1) umfassen, aus dem Speicher (2), und
• Abspielen (600) der Animation auf Basis der Animationsdaten auf der Anzeigevorrichtung (3), wobei die Animation an einem räumlichen Modell des Fahrzeugs in einer Repräsentation einer aktuellen Umgebung des Fahrzeugs angezeigt wird, in der sich das Fahrzeug befindet.

2. Verfahren nach Anspruch 1, **dadurch gekennzeichnet, dass** vor dem Schritt des dritten Abrufens (300) die folgenden Schritte ausgeführt werden:
• Empfangen (700) einer Benutzereingabe über eine Eingabeeinheit (5), wobei die Benutzereingabe eine abzuspielende Animation umfasst, und
• Auswählen (800) der abzurufenden Animationsdaten anhand der Benutzereingabe.

3. Verfahren nach Anspruch 2, **dadurch gekennzeichnet, dass** vor dem Empfangen (700) der Benutzereingabe der folgende Schritt ausgeführt wird:
• Ausgeben (900) eines Kataloges von Animationen, zu denen Animationsdaten in dem Speicher (2) gespeichert sind,
wobei das Ausgeben (900) ein Anzeigen auf der Anzeigevorrichtung (3) insbesondere als Überlagerung zu den zusammengeführten Szeneriedaten und Modelldaten umfasst.

4. Verfahren nach einem der vorhergehenden Ansprüche, **dadurch gekennzeichnet, dass** die Animation und/oder die zusammengeführten Szeneriedaten und Modelldaten mit einer Informationsanzeige zur Darstellung zusätzlicher Informationen überlagert werden.

5. Verfahren nach einem der vorhergehenden Ansprüche, **dadurch gekennzeichnet, dass** vor dem Abspielen der Animation eine Anzeige eines Schwenks der virtuellen Kamera in eine durch die Animation festgelegte vordefinierte Startperspektive erfolgt.

6. Verfahren nach einem der vorhergehenden Ansprüche, **gekennzeichnet durch** die Schritte:
• Erfassen (1000) des Umfelds des Fahrzeugs (1) mit einer Vielzahl von Kameras (4),
• Zusammensetzen (2000) von Bildern der Vielzahl der Kameras (4) zu Szeneriedaten,
• Speichern (3000) der Szeneriedaten in dem Speicher (2).

7. Verfahren nach einem der vorhergehenden Ansprüche, **dadurch gekennzeichnet, dass** die Animation eine Funktion des Fahrzeugs (1) wiedergibt und/oder eine Warnung und/oder einen Pflegehinweis und/oder einen Wartungshinweis umfasst.

8. Computerprogrammprodukt umfassend maschinenlesbaren Programmcode zum Ausführen der Schritte des Verfahrens gemäß einem der vorhergehenden Ansprüche, wenn das Computerprogrammprodukt auf einer Rechenvorrichtung läuft.

9. Steuergerät (6) für ein Fahrzeug (1), eingerichtet zum Ausführen des Programmcodes des Computerprogrammprodukts gemäß Anspruch 8.

10. Anordnung (7) umfassend ein Steuergerät (6) nach Anspruch 9, eine Eingabeeinheit (5), eine Vielzahl von Kameras (4), eine Anzeigevorrichtung (3) und einen Speicher (2), wobei das Steuergerät (6) mit der Eingabeeinheit (5), der Vielzahl von Kameras (4), dem Speicher (2) und der Anzeigevorrichtung (3) zur Signalübertragung verbunden ist.

## Claims

1. Method for displaying a function of a vehicle (1), comprising the steps of:
• firstly retrieving (100) scenery data, which reproduce an environment of the vehicle (1) three dimensionally, from a memory (2),
• secondly retrieving (200) model data, which reproduce a model of the vehicle (1) three dimensionally, from the memory (2),
• combining (400) the scenery data and the model data, and
• displaying (500) the combined scenery data and model data on a display apparatus (3) from a predefined perspective of a virtual camera,
**characterized in that** the following steps are performed
• thirdly retrieving (300) animation data, which comprise an animation of the model of the vehicle (1), from the memory (2), and
• playing back (600) the animation on the display apparatus (3) on the basis of the animation data, wherein the animation is displayed on a three dimensional model of the vehicle in a representation of current surroundings of the vehicle that the vehicle is in.

2. Method according to Claim 1, **characterized in that** the step of thirdly retrieving (300) is preceded by the following steps being performed:
• receiving (700) a user input via an input unit (5), wherein the user input comprises an animation to be played back, and
• selecting (800) the animation data to be retrieved on the basis of the user input.

3. Method according to Claim 2, **characterized in that** the receiving (700) of the user input is preceded by the following step being performed:
• outputting (900) a catalogue of animations for which animation data are stored in the memory (2),
wherein the outputting (900) comprises displaying on the display apparatus (3), in particular as an overlay for the combined scenery data and model data.

4. Method according to one of the preceding claims, **characterized in that** the animation and/or the combined scenery data and model data are overlaid with an information display for depicting additional information.

5. Method according to one of the preceding claims, **characterized in that** the playing back of the animation is preceded by display of a swivel of the virtual camera into a predefined starting perspective stipulated by the animation being effected.

6. Method according to one of the preceding claims, **characterized by** the steps of:
• capturing (1000) the environment of the vehicle (1) using a multiplicity of cameras (4),
• compiling (2000) images from the multiplicity of cameras (4) to produce scenery data,
• storing (3000) the scenery data in the memory (2) .

7. Method according to one of the preceding claims, **characterized in that** the animation reproduces a function of the vehicle (1) and/or comprises a warning and/or a care instruction and/or a maintenance instruction.

8. Computer program product comprising machine-readable program code for performing the steps of the method according to one of the preceding claims when the computer program product runs on a computation apparatus.

9. Controller (6) for a motor vehicle (1), configured to execute the program code of the computer program product according to Claim 8.

10. Arrangement (7) comprising a controller (6) according to Claim 9, an input unit (5), a multiplicity of cameras (4), a display apparatus (3) and a memory (2), wherein the controller (6) is connected to the input unit (5), the multiplicity of cameras (4), the memory (2) and the display apparatus (3) for the purpose of signal transmission.

## Revendications

1. Procédé d'affichage d'une fonction d'un véhicule (1) comprenant les étapes consistant à :
- extraire en premier lieu (100) d'une mémoire (2) des données de scène qui reproduisent dans l'espace un environnement du véhicule (1),
- extraire en deuxième lieu (200) de la mémoire (2) des données de modèle représentant spatialement un modèle du véhicule (1),
- fusionner (400) les données de scène et les données de modèle, et
- afficher (500) sur un dispositif d'affichage (3) les données de scène et les données de modèle fusionnées selon une perspective prédéfinie d'une caméra virtuelle, **caractérisé en ce que** les étapes suivantes sont effectuées :
- extraire en troisième lieu (300) de la mémoire (2) des données d'animation comprenant une animation du modèle du véhicule (1), et
- reproduire (600) sur le dispositif d'affichage (3) l'animation sur la base des données d'animation, dans lequel l'animation est affichée sur un modèle spatial du véhicule dans une représentation d'un environnement réel du véhicule dans lequel se trouve le véhicule.

2. Procédé selon la revendication 1, **caractérisé en ce que** les étapes suivantes sont effectuées avant l'étape d'extraction effectuée en troisième lieu (300) :
- recevoir (700) une entrée utilisateur par l'intermédiaire d'une unité d'entrée (5), dans lequel l'entrée utilisateur comprend une animation devant être reproduite, et
- sélectionner (800) les données d'animation à extraire à l'aide de l'entrée utilisateur.

3. Procédé selon la revendication 2, **caractérisé en ce que** l'étape suivante est effectuée avant la réception (700) de l'entrée utilisateur :
- présenter (900) un catalogue d'animations pour lesquelles des données d'animation sont stockées dans la mémoire (2), dans lequel la présentation (900) comprend un affichage sur le dispositif d'affichage (3), en particulier de manière superposée aux données de scène et aux données de modèle fusionnées.

4. Procédé selon l'une des revendications précédentes, **caractérisé en ce que** l'animation et/ou les données de scène et les données de modèle fusionnées sont superposées à un affichage d'informations destiné à représenter des informations supplémentaires.

5. Procédé selon l'une des revendications précédentes, **caractérisé en ce qu'**avant la reproduction de l'animation, un affichage d'un panoramique de la caméra virtuelle est effectué selon une perspective de départ prédéfinie, déterminée par l'animation.

6. Procédé selon l'une des revendications précédentes, **caractérisé par** les étapes consistant à :
- détecter (1000) l'environnement du véhicule (1) au moyen d'une pluralité de caméras (4),
- assembler (2000) des images provenant de la pluralité de caméras (4) pour obtenir des données de scène,
- stocker (3000) les données de scène dans la mémoire (2) .

7. Procédé selon l'une des revendications précédentes, **caractérisé en ce que** l'animation reproduit une fonction du véhicule (1) et/ou comprend un avertissement et/ou une indication d'entretien et/ou une indication de maintenance.

8. Produit de programme d'ordinateur comprenant un code de programme lisible par machine destiné à mettre en oeuvre les étapes du procédé selon l'une des revendications précédentes lorsque le produit de programme d'ordinateur est exécuté sur un dispositif informatique.

9. Appareil de commande (6) destiné à un véhicule (1), conçu pour exécuter le code de programme du produit de programme d'ordinateur selon la revendication 8.

10. Système (7) comprenant un appareil de commande (6) selon la revendication 9, une unité d'entrée (5), une pluralité de caméras (4), un dispositif d'affichage (3) et une mémoire (2),
dans lequel l'appareil de commande (6) est relié à l'unité d'entrée (5), à la pluralité de caméras (4), à la mémoire (2) et au dispositif d'affichage (3) pour la transmission de signaux.
